# EUROPEAN PATENT APPLICATION

(11) **EP 3 413 505 A1**
(43) Date of publication of application: **12.12.2018**
(21) Application number: 18161282.1
(22) Date of filing: 12.03.2018
(51) Int. Cl.: H04L 9/08, H04L 29/08, H04L 9/14

(54) **COMMUNICATION APPARATUS, COMMUNICATION SYSTEM, KEY SHARING METHOD, AND COMPUTER-READABLE MEDIUM**

(30) Priority: 06.06.2017 JP 2017111975
(71) Applicant: KABUSHIKI KAISHA TOSHIBA, Minato-ku Tokyo 105-8001 (JP)
(72) Inventor: TANIZAWA, Yoshimichi, Tokyo 105-8001 (JP)
(74) Representative: Moreland, David

(57) **Abstract**

According to an embodiment, a communication apparatus (10) includes a reception unit (12), a sharing control unit (15), and a transmission unit (16). The reception unit (12) is configured to receive, from an application, an acquisition request for an encryption key to be used for encrypted data communication between the application and a communication counterpart thereof. The sharing control unit (15) is configured to, with another communication apparatus connected to the communication counterpart, share the encryption key using quantum key distribution when being able to share the encryption key using quantum key distribution, and share the encryption key using a key sharing scheme other than quantum key distribution when being unable to share the encryption key using quantum key distribution. The transmission unit (16) is configured to transmit, to the application, the encryption key and information indicating a scheme used for sharing the encryption key.

## Description

### FIELD

The present disclosure relates to a communication apparatus, a communication system, a key sharing method, and a computer-readable medium.

### BACKGROUND

Quantum key distribution (QKD) has been conventionally known, which enables a transmission device and a reception device connected thereto via optical fiber to securely share an encryption key using single photons successively transmitted from the transmission device to the reception device. The laws of quantum mechanics on which QKD is based ensures that an encryption key shared using QKD is protected from eavesdropping. An encryption key thus shared is used for encrypted data communication using, for example, the one-time pad technique. Information theory ensures that even the most highly knowledgeable eavesdroppers cannot decrypt encrypted data transmitted and received using the one-time pad technique.

### BRIEF DESCRIPTION OF THE DRAWINGS

FIG. 1 explains an example of the basic configuration of a communication system;
FIG. 2 illustrates an example of a quantum key distribution (QKD) network;
FIG. 3 is a sequence diagram illustrating an example of a method for sharing a global key (application encryption key) through the QKD network in FIG. 2;
FIG. 4 illustrates an example of connected node information;
FIG. 5A illustrates a first example of an application that cannot be connected to a node that executes QKD;
FIG. 5B illustrates a second example of an application that cannot be connected to a node that executes QKD;
FIG. 6 illustrates an example of the functional configuration of a node in a first arrangement;
FIG. 7 illustrates examples of acquisition requests for a global key (application encryption key) in the first arrangement;
FIG. 8 is a flowchart illustrating an example of a key sharing method in the first arrangement;
FIG. 9A illustrates a first example of the format of response data in the first arrangement;
FIG. 9B illustrates a second example of the format of response data in the first arrangement;
FIG. 9C illustrates a third example of the format of response data in the first arrangement;
FIG. 9D illustrates a fourth example of the format of response data in the first arrangement;
FIG. 10A illustrates a first example of a communication system in which the key sharing method in the first arrangement is implemented;
FIG. 10B illustrates an example of connected node information corresponding to the configuration of the communication system in FIG. 10A;
FIG. 11A illustrates a second example of a communication system in which the key sharing method in the first arrangement is implemented;
FIG. 11B illustrates an example of connected node information corresponding to the configuration of the communication system in FIG. 11A;
FIG. 11C illustrates an example of node state information corresponding to the configuration of the communication system in FIG. 11A;
FIG. 12 is a flowchart illustrating an example of a method for acquiring an encryption key for an application in a second arrangement;
FIG. 13 is a flowchart illustrating a method for acquiring an encryption key for an application in a modification of the second arrangement;
FIG. 14 illustrates an example of link information in a third arrangement;
FIG. 15 illustrates an example of the format of response data in a fourth arrangement;
FIG. 16 illustrates examples of acquisition requests for a global key (application encryption key) in a fifth arrangement;
FIG. 17 illustrates examples of acquisition requests for a global key (application encryption key) in a sixth arrangement;
FIG. 18 illustrates an example of the hardware configuration of the main part of a node in any one of the first to the sixth arrangements; and
FIG. 19 illustrates an example of the hardware configuration of an information processing apparatus that executes an application in any one of the first to the sixth arrangements.

### DETAILED DESCRIPTION

According to an arrangement, a communication apparatus includes a reception unit, a generation unit, a determination unit, a sharing control unit, and a transmission unit. The reception unit is configured to receive, from an application, an acquisition request for an encryption key to be used for encrypted data communication between the application and a communication counterpart thereof. The generation unit is configured to generate the encryption key. The determination unit is configured to determine whether there is another communication apparatus connected to the communication counterpart. The sharing control unit is configured to, with the other communication apparatus, share the encryption key using quantum key distribution when being able to share the encryption key using quantum key distribution. The sharing control unit is configured to, with the other communication apparatus, share the encryption key using a key sharing scheme other than quantum key distribution when being unable to share the encryption key using quantum key distribution. The transmission unit is configured to transmit, to the application, the encryption key and information indicating a scheme used for sharing the encryption key.

The following describes arrangements of a communication apparatus, a communication system, a key sharing method, and a computer program product in detail with reference to the drawings.

### First Arrangement

A first arrangement is described first.

### Basic Configuration

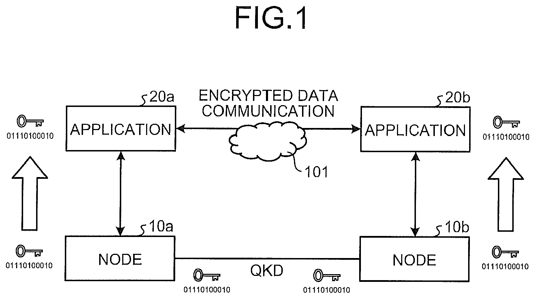

FIG. 1 explains an example of the basic configuration of a communication system. The communication system in FIG. 1 includes: a quantum key distribution (QKD) system including nodes 10a and 10b; and an encrypted data communication system including applications 20a and 20b. Each of the applications 20a and 20b performs encrypted data communication via an encrypted data communication network 101.

The nodes 10a and 10b are nodes (trusted nodes) that perform QKD. In connection with FIG. 1, descriptions assume that the nodes 10a and 10b are communication apparatuses serving as a transmitter and a receiver, respectively. Hereinafter, the respective nodes 10a and 10b are referred to as nodes 10 when there is no need to distinguish therebetween.

The applications 20a and 20b perform encrypted data communication using an encryption key shared between the nodes 10a and 10b. An encryption key to be used by the application 20a is provided thereto by the node 10a. An encryption key to be used by the application 20b is provided thereto by the node 10b. Each of the applications 20a and 20b is to be executed by an information processing apparatus such as a server apparatus, a personal computer, or a smart device. Hereinafter, the respective applications 20a and 20b are referred to as applications 20 when there is no need to distinguish therebetween. The information processing apparatus that executes each of the applications 20 may be the corresponding node 10.

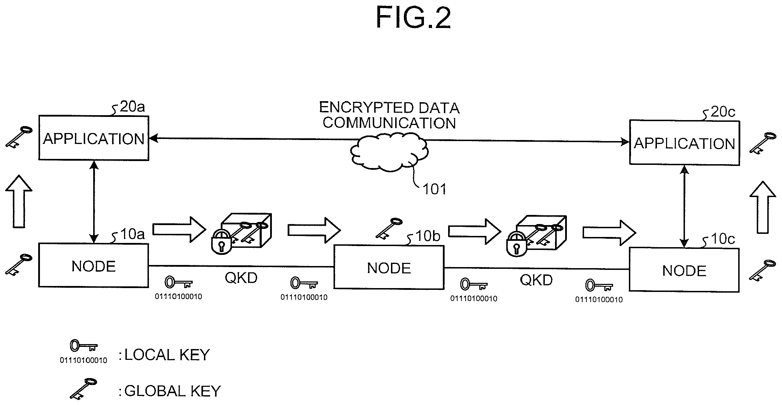

A method for sharing an encryption key using the QKD technique uses a single photon as a media and is therefore subject to a constraint on a distance at which the encryption key can be shared. For this reason, the QKD network as illustrated in FIG. 2 is used.

FIG. 2 illustrates an example of the QKD network. The QKD network in FIG. 2 includes nodes 10a to 10c connected to one another via optical fiber links. The information processing apparatus that executes the application 20a is connected to the node 10a. An information processing apparatus that executes an application 20c is connected to the node 10c. Each of the applications 20a and 20c performs encrypted data communication via the encrypted data communication network 101.

Each of the nodes 10 executes QKD between itself and the node 10 adjacent thereto that is connected thereto via the optical fiber link and thereby shares an encryption key therebetween. In the first arrangement, descriptions use the term "local key" to mean an encryption key to be shared using QKD between any two adjacent nodes connected to each other via an optical fiber link. That is, a local key is a link key to be used between both sides of a link.

Each of the nodes 10 generates an encryption key based on, for example, random number information independently of QKD. In the first arrangement, description uses the term "global key" to mean this encryption key. That is, a global key is an application encryption key to be used for encrypted data communication between the applications 20.

Each of the nodes 10 encrypts the global key using a local key, and transfers the encrypted global key to the node 10 that is adjacent thereto. The respective nodes 10 perform the processing for successively transferring, to the nodes 10 that are adjacent thereto, the global key encrypted with the local keys shared between the respective nodes 10 and the adjacent nodes 10. Thus, each of the nodes and any other one of the nodes 10 can share the global key.

As described above, a global key is transferred over links encrypted with corresponding local keys shared using QKD. It can therefore be stated that, if at least the nodes 10 are secure, a global key is secure to the same extent as local keys are secure based on the security of the nodes 10.

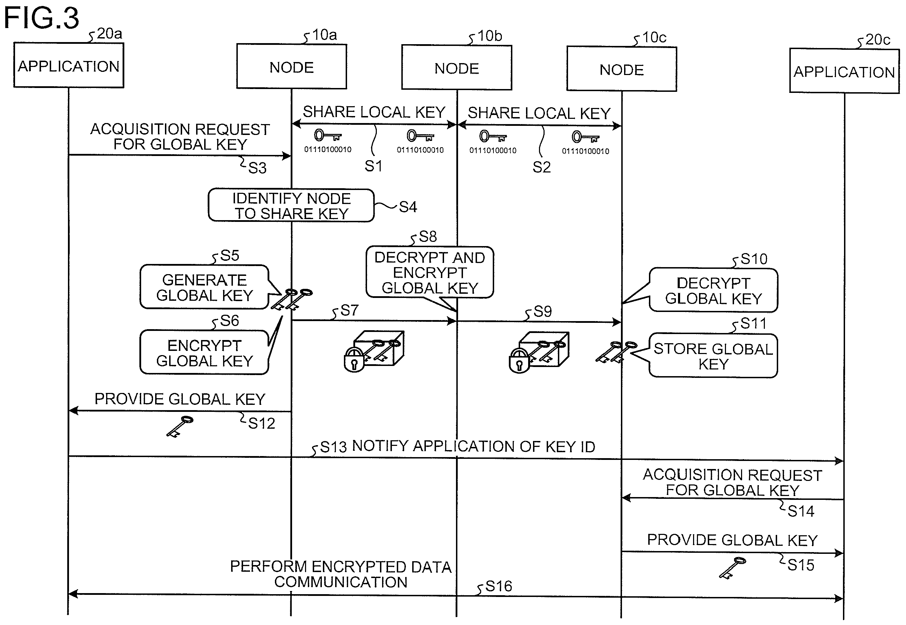

FIG. 3 is a sequence diagram illustrating an example of a method for sharing a global key (application encryption key) through the QKD network in FIG. 2. In connection with FIG. 3, descriptions are given of a case where the application 20a performs encrypted data communication with the application 20c.

First of all, the nodes 10a and 10b share a local key using QDK (Step S1). The nodes 10b and 10c then share a local key using QDK (Step S2).

The application 20a then transmits, to the node 10a, an acquisition request for a global key to be used for encrypted data communication with a communication counterpart of the application 20a (Step S3). The acquisition request contains, for example, communication-counterpart identifying information for identifying the communication counterpart. The communication-counterpart identifying information is, for example, information such as the name of an application serving as the communication counterpart and the address of the communication counterpart.

Subsequently, the node 10a identifies, as the node 10 to share a global key therewith, the node 10c that is connected to the communication counterpart indicated by the acquisition request transmitted in the processing at Step S3 (Step S4). Specifically, the node 10a identifies the node 10 to share a global key therewith, for example, by referring to connected node information. The connected node information is directory data in which the connection relations between the applications 20 and the nodes 10 are recorded.

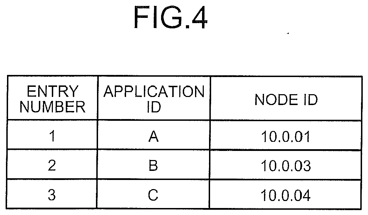

FIG. 4 illustrates an example of the connected node information. The connected node information in FIG. 4 includes entry numbers, application identification data (ID), and node ID. The entry numbers are numbers that identify respective pieces of data contained in the connected node information. The application ID is identification information that identifies the respective applications 20. For example, "A" indicates the application ID for the application 20a. The node ID is identification information that identifies the respective nodes 10. In the example in FIG. 4, IP addresses are used as the identification information for the nodes 10.

Referring back to FIG. 3, the node 10a then generates a global key (Step S5). The global key thus generated is identified by identification information, such as key ID, that identifies the global key. The node 10a then encrypts, with the local key shared in the processing at Step S1, the global key generated in the processing at Step S5 and the key ID of this global key (Step S6). The node 10a then transmits the global key encrypted in the processing at Step S6 to the node 10b (Step S7).

Upon receiving the encrypted global key from the node 10a, the node 10b decrypts and then encrypts the encrypted global key (Step S8). Specifically, the node 10b decrypts the encrypted global key with the local key shared in the processing at Step S1 and encrypts this decrypted global key with the local key shared in the processing at Step S2.

The node 10b then transmits the global key encrypted in the processing at Step S8 to the node 10c (Step S9).

Upon receiving the encrypted global key from the node 10b, the node 10c decrypts the encrypted global key with the local key shared in the processing at Step S2 (Step S10). The node 10c then stores therein the global key decrypted in the processing at Step S10 (Step S11).

The node 10a then provides the global key generated in the processing at Step S5 and the key ID for this global key to the application 20a (Step S12).

The application 20a then notifies the application 20c of the key ID for the global key provided in the processing at Step S12 (Step S13).

The application 20c then transmits an acquisition request for a global key to the node 10c, the acquisition request containing the key ID that the application 20c is notified of in the processing at Step S13 (Step S14). The application 20c then receives, from the node 10c, the global key identified by the key ID transmitted in the processing at Step S14 (Step S15).

The applications 20a and 20b perform encrypted data communication using the global key shared through the processing at Steps S1 to S15 (Step S16).

The above descriptions have been given of a case where, after the node 10a receives the acquisition request for a global key in the processing at Step S3, the processing for sharing the global key is executed in the processing at Steps S5 to S11. However, the processing for sharing the global key may be executed at any desired timing. For example, the node 10a may use a global key shared in advance between the nodes 10a and 10c after receiving the acquisition request for a global key in the processing at Step S3.

The above descriptions have been given of a case where notification of the key ID is made in the processing at Step S13 prior to encrypted data communication between the applications 20a and 20c. However, the processing for notification of the key ID may be executed at any desired timing. For example, the application 20a may transmit the key ID that identifies a global key provided in the processing at Step S12, along with encrypted data that has been encrypted with the global key, to the application 20c.

In general, the above respective nodes 10 are installed in geographically remote locations, and each of the applications 20 is to be executed on the corresponding node 10 or on an information processing apparatus that operates in a server room or the like in which the corresponding node 10 also operates. The respective nodes 10 need to have QKD devices installed therein that perform QKD; however, QKD devices in general are expensive. It is therefore difficult to prepare in advance all of the nodes 10 that are needed in the communication system; and the nodes 10 are possibly gradually installed at different points in time after the start of operation of the communication system.

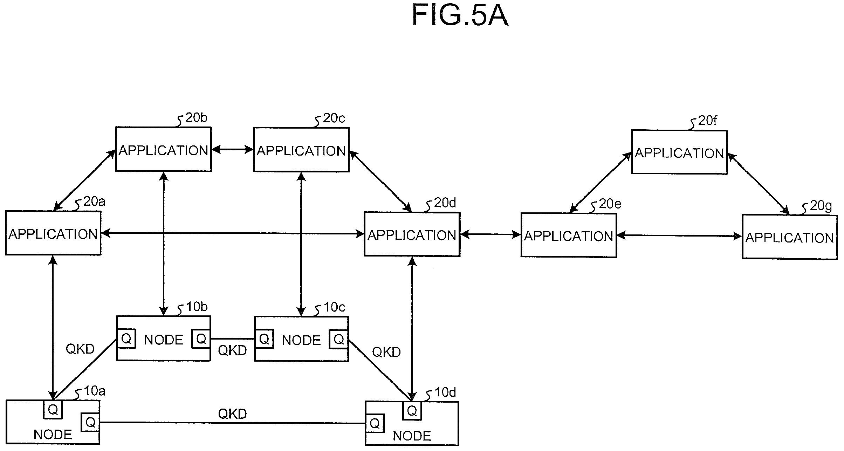

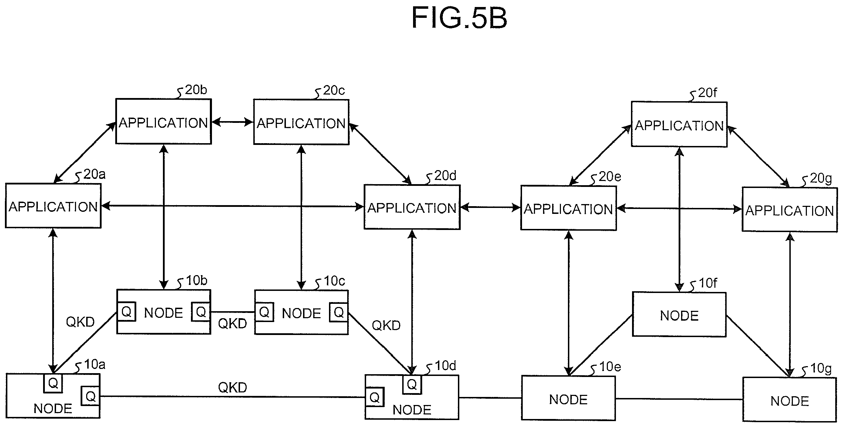

FIG. 5A illustrates a first example of the application 20 that cannot be connected to any of the nodes 10 that perform QKD. FIG. 5B illustrates a second example of the application 20 that cannot be connected to any of the nodes 10 that perform QKD. In FIGS. 5A and 5B, "Q" represents a "QKD device". A link (QKD link) between the nodes 10 that are connected to each other via "Q - Q" indicates that corresponding QKD devices are in operation. In contrast, a link between the nodes 10 that are connected to each other without "Q" illustrated in the link indicates that corresponding QKD devices are not in operation. Examples of a case where a QKD device is out of operation include cases where the QKD device has not been installed yet and where the QKD device is out of order.

In the example of FIG. 5A, applications 20e to 20g cannot be connected to any of the nodes 10. The state in FIG. 5A corresponds to a state such that, for example, a communication system that includes a QKD network (nodes 10a to 10d) and an encrypted data communication network (applications 20a to 20d) is being further scaled up to a huge communication system by being connected to another network including the applications 20e to 20g for which the nodes 10 have not been incorporated yet.

In the example of FIG. 5B, the QKD functions of nodes 10e to 10g cannot be used. The state in FIG. 5B corresponds to a state such that, for example, while these nodes 10 have been installed as computer servers, these nodes 10 are in either of the following states: having no device installed therein that performs QKD; and having a QKD device installed therein that has not yet started to operate or that is out of order.

In the first arrangement, descriptions are given of operation of the communication system that makes it possible to maintain the security of communication within a network even in cases such as those in FIGS. 5A and 5B.

### Example of Functional Configuration

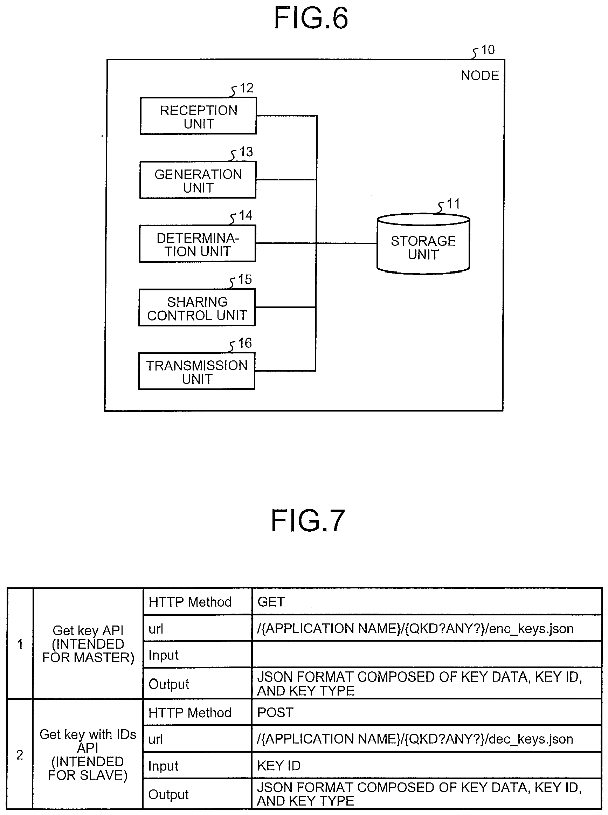

FIG. 6 illustrates an example of the functional configuration of the node 10 in the first arrangement. The node 10 in the first arrangement includes a storage unit 11, a reception unit 12, a generation unit 13, a determination unit 14, a sharing control unit 15, and a transmission unit 16.

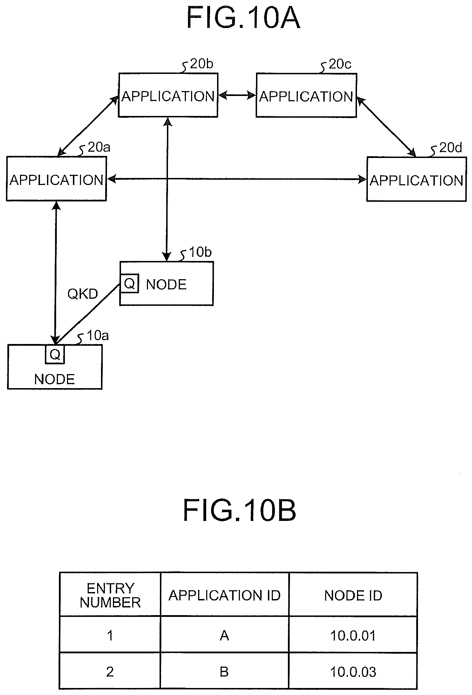

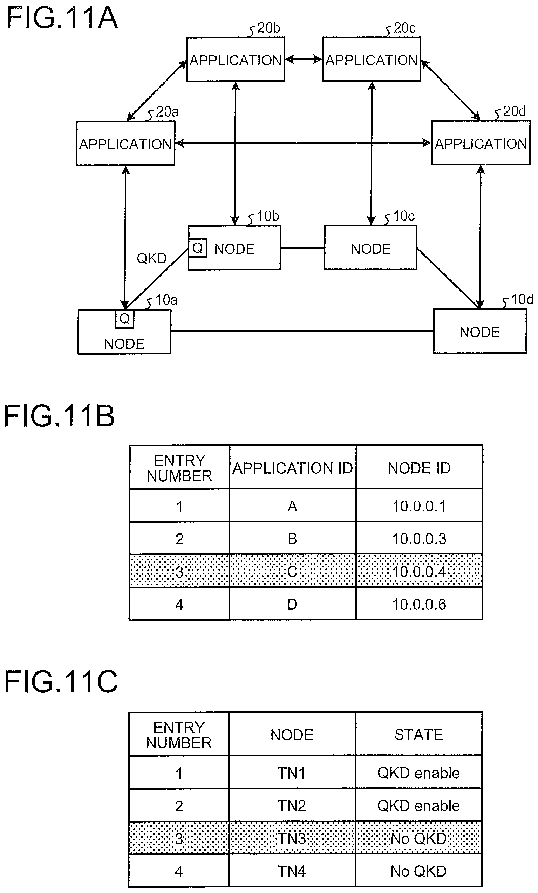

The storage unit 11 stores therein information. Examples of the information to be stored in the storage unit 11 include connected node information (refer to the descriptions of FIG. 4 and FIG. 10B) and node state information (refer to the descriptions of FIG. 11C).

The reception unit 12 receives, from the corresponding application 20, an acquisition request for a global key to be used for encrypted data communication with a communication counterpart of the application 20.

Herein, the application 20 that starts an encrypted data communication session is referred to as a master, and the application 20 that responds to an encrypted data communication session is referred to as a slave. The acquisition requests for a global key can be implemented through web application programming interfaces (APIs), which are defined as illustrated in FIG. 7 for example.

FIG. 7 illustrates examples of the acquisition requests for a global key (application encryption key) in the first arrangement.

In each of the examples of FIG. 7, the aforementioned communication-counterpart identifying information is {application name} contained in a Uniform Resource Locator (URL). The URL further contains {QKD?ANY?}, which indicates a key type. More specifically, {QKD?ANY?} indicates which of QKD and ANY is applicable, and is: "/application name/QKD/enc_keys.json" if QKD is applicable; and "/application name/ANY/enc_keys.json" if ANY is applicable. Likewise, for example, when there are three key types that can be designated, the URL contains {QKD?ANY?DH?}.

The key type indicates a scheme for sharing a global key. By being QKD, the key type indicates that the application 20 is requesting a global key shared using QRD.

By being ANY, the key type indicates that the application 20 also allows a global key shared using a key sharing scheme other than QRD. If the key type is ANY, the application 20 may change operation thereof depending on the key type that is applicable to a global key actually acquired.

The reason for having input of a key ID in the web API intended for a slave while not having input in the web API intended for a master is as follows. The slave sets a key ID that the master has notified the slave of as the input for the web API intended for a slave, and thereby acquires the same global key as the master has acquired.

Referring back to FIG. 6, the generation unit 13 generates a global key.

The determination unit 14 determines whether there is any one of the nodes 10 that is connected to a communication counterpart contained in the acquisition request received by the reception unit 12.

The sharing control unit 15 causes the nodes 10 and another one of the nodes 10 that is connected to the communication counterpart to share a global key using QKD if the sharing using QKD is possible or using another key sharing scheme if the sharing using QKD is impossible. Example of another key sharing scheme includes the Diffie-Hellman (DH) key exchange scheme.

The transmission unit 16 transmits, to the application 20, a global key and information indicating a scheme for sharing the global key.

### Key Sharing Method

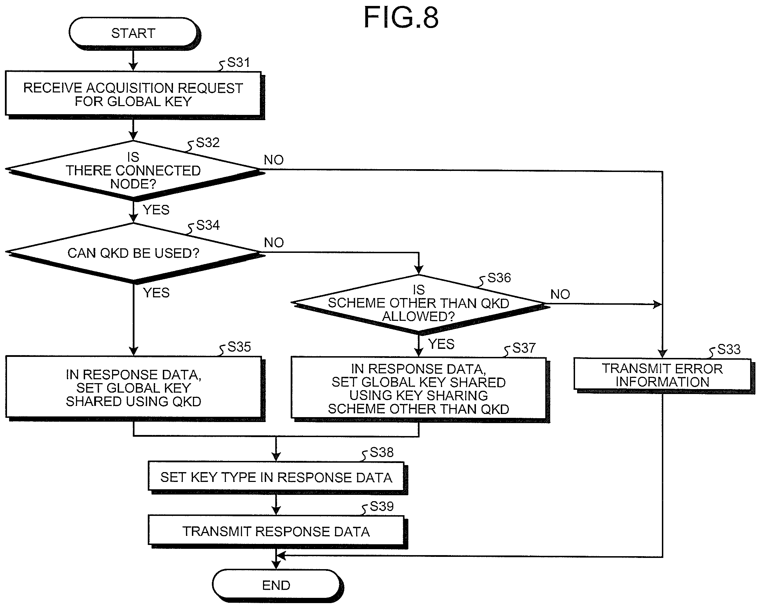

FIG. 8 is a flowchart illustrating an example of a key sharing method in the first arrangement. First of all, the reception unit 12 receives, from the corresponding application 20, an acquisition request for a global key to be used for encrypted data communication with a communication counterpart of the application 20 (Step S31). The acquisition request for a global key contains the aforementioned key type (QKD or ANY) and the aforementioned communication-counterpart identifying information.

The determination unit 14 then determines whether there is any one of the nodes 10 that is connected to a communication counterpart contained in the acquisition request transmitted in the processing at Step S31 (Step S32).

If there is not any one of the nodes 10 that is connected to the communication counterpart (No at Step S32), the transmission unit 16 transmits, to the application 20, error information indicating that no global key cannot be provided (Step S33).

If there is any one of the nodes 10 that is connected to the communication counterpart (Yes at Step S32), the sharing control unit 15 determines whether QKD can be used (Step S34) .

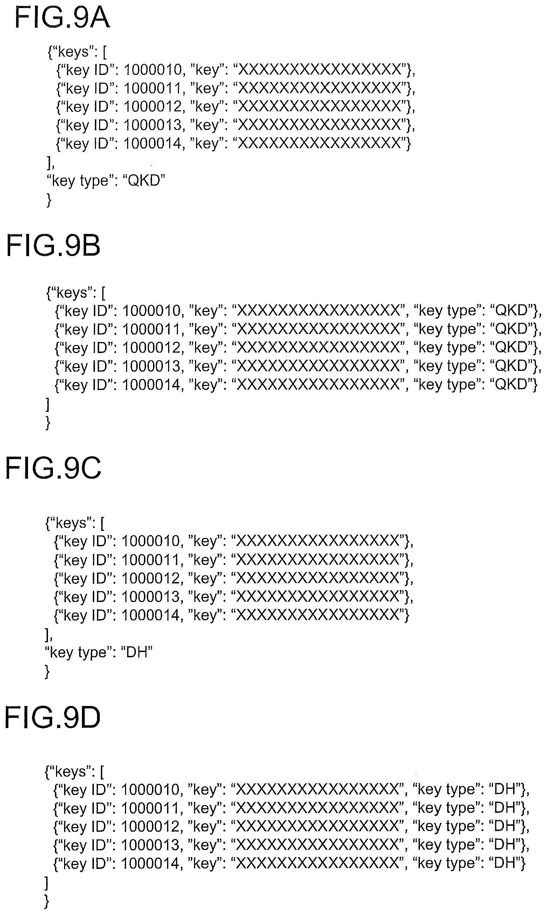

If QKD can be used (Yes at Step S34), the sharing control unit 15 sets, in response data, a global key shared using QKD (Step S35). The sharing control unit 15 then sets the key type (QKD) in the response data (Step S38). The transmission unit 16 then transmits, to the application 20, the response data that contains the global key and the key type (QKD) indicating a scheme for sharing the global key (Step S39). Examples of the response data transmitted at this step include those presented in FIGS. 9A and 9B.

FIG. 9A illustrates a first example of the format of the response data in the first arrangement. FIG. 9B illustrates a second example of the format of the response data in the first arrangement. Key ID is indicated by "key ID". Key data (a global key) is indicated by "key". A key type is indicated by "key type". In each of the examples in FIGS. 9A and 9B, QKD is set as the key type.

Referring back to FIG. 8, if QKD cannot be used (No at Step S34), the sharing control unit 15 determines, with reference to the acquisition request received in the processing at Step S31, whether a global key shared using a key sharing scheme other than QKD is allowed (Step S36). If a global key shared using a key sharing scheme other than QKD is not allowed (No at Step S36), the transmission unit 16 transmits, to the application 20, error information indicating that no global key is available (Step S33).

If a global key shared using a key sharing scheme other than QKD is allowed (Yes at Step S36), the sharing control unit 15 sets, in response data, a global key shared using DH (a key sharing scheme other than QKD) (Step S37). The sharing control unit 15 then sets the key type (DH) in the response data (Step S38). The transmission unit 16 then transmits, to the application 20, the response data that contains the global key and the key type (DH) indicating a scheme for sharing the global key (Step S39). Examples of the response data transmitted at this step include those presented in FIGS. 9C and 9D

FIG. 9C illustrates a third example of the format of the response data in the first arrangement. FIG. 9D illustrates a fourth example of the format of the response data in the first arrangement. Key ID is indicated by "key ID". Key data (a global key) is indicated by "key". A key type is indicated by "key type". In each of the examples in FIGS. 9C and 9D, DH is set as the key type.

### Descriptions of Specific Examples

FIG. 10A illustrates a first example of a communication system in which the key sharing method in the first arrangement is implemented. FIG. 10B illustrates an example of connected node information corresponding to the configuration of the communication system in FIG. 10A.

The communication system in FIG. 10A includes the nodes 10a and 10b and the applications 20a to 20d. The applications 20c to 20d cannot be connected to any of the nodes 10. In connection with FIG. 10A, descriptions are given of an exemplary case where the application 20a transmits an acquisition request for a global key to be used for performing encrypted data communication with the application 20c.

First of all, the application 20a transmits, to the node 10a, an acquisition request for a global key to be used for encrypted data communication with the application 20c. The determination unit 14 of the node 10a then determines, by referring to the connected node information in FIG. 10B, whether there is any one of the nodes 10 that is connected to the application 20c. In the connected node information in FIG. 10B, there is no data that contains the application ID of the application 20c. The determination unit 14 of the node 10a can therefore determine, based on the connected node information in FIG. 10B, that there is none of the nodes 10 that is connected to the application 20c. The transmission unit 16 of the node 10 transmits, to the application 20a, error information indicating that no global key is available.

FIG. 11A illustrates a second example of a communication system in which the key sharing method in the first arrangement is implemented. FIG. 11B illustrates an example of connected node information corresponding to the configuration of the communication system in FIG. 11A. FIG. 11C illustrates an example of node state information corresponding to the configuration of the communication system in FIG. 11A.

The communication system in FIG. 11A includes the nodes 10a to 10d and the applications 20a to 20d. The node 10c that is connected to the application 20c has no QKD device installed therein or has a QKD device installed therein that is currently out of order. Likewise, the node 10d that is connected to the application 20d has no QKD device installed therein or has a QKD device installed therein that is currently out of order. In connection with FIG. 11A, descriptions are given of an exemplary case where the application 20a transmits an acquisition request for a global key to be used for performing encrypted data communication with the application 20c.

First of all, the application 20a transmits, to the node 10a, an acquisition request for a global key to be used for encrypted data communication with the application 20c. The acquisition request for a global key contains the aforementioned key type (QKD or ANY) and the aforementioned communication-counterpart identifying information.

The determination unit 14 of the node 10a then determines, by referring to the connected node information in FIG. 11B, whether there is the node 10c that is connected to the application 20c. The connected node information in FIG. 11B includes data that contains the application ID (C) of the application 20c. The determination unit 14 of the node 10a can therefore find out, with reference to the connected node information in FIG. 11B, that there is the node 10c that is connected to the application 20c.

The sharing control unit 15 of the node 10a determines, with reference to the node state information in FIG. 11C, whether QKD can be used. The node state information is described here.

The node state information in FIG. 11C contains entry numbers, nodes and states. The entry numbers are numbers that identify respective pieces of data contained in the node state information. Each of the nodes 10 is entered under NODE. Specifically, "TN1" indicates the node 10a. "TN2" indicates the node 10b. "TN3" indicates the node 10c. "TN4" indicates the node 10d. "STATE" indicates whether QKD can be used. Specifically, "QKD enable" indicates that QKD can be used. "No QKD" indicates that QKD cannot be used.

The sharing control unit 15 of the node 10 can therefore find out, with reference to the node state information in FIG. 11C, that the node 10c that is connected to the application 20c cannot use QKD.

If the key type contained in the acquisition request for a global key is QKD, the transmission unit 16 of the node 10 transmits, to the application 20a, error information indicating that no global key is available.

If the key type contained in the acquisition request for a global key is ANY, the sharing control unit 15 of the node 10 causes the nodes 10a and 10c to share a global key using the DH key exchange scheme. When to share a global key using the DH key exchange scheme may be any desired timing. The nodes 10a and 10c may use a global key shared therebetween in advance using the DH key exchange scheme. The transmission unit 16 of the node 10a transmits the response data, such as any of the aforementioned examples in FIGS. 9C and 9D, to the application 20a.

The application 20a receives the response data, such as any of the aforementioned examples in FIGS. 9C and 9D, from the node 10a. Thus, the application 20a can determine that a global key provided thereto by the node 10a is not a key the security of which is ensured by QKD, but is a key shared using the DH key exchange scheme. The application 20a can operate depending on the key type.

For example, for a global key shared using the DH key exchange scheme, the application 20a may use a higher refresh rate than it uses for a global key shared using QKD. For example, when a global key shared using the DH key exchange scheme is provided, the application 20a may change a content to be transmitted to another one of the applications 20. Furthermore, for example, when a global key shared using the DH key exchange scheme is provided, the application 20a does not need to perform communication with the application 20c.

As described above, in each of the nodes 10 (communication apparatuses) in the first arrangement, the reception unit 12 receives, from the corresponding application 20, an acquisition request for a global key (application encryption key) to be used for encrypted data communication with a communication counterpart of this application 20. The generation unit 13 generates a global key. The determination unit 14 determines whether there is any one of the nodes 10 that is connected to a communication counterpart of the application 20. The sharing control unit 15 causes the node 10 and another one of the nodes 10 to share a global key using QKD if the sharing using QKD is possible or using another key sharing scheme if the sharing using QKD is impossible. Finally, the transmission unit 16 transmits, to the application 20, a global key and the key type indicating a scheme for sharing the global key.

The nodes 10 in the first arrangement makes it possible to enable the security of communication within a network to be maintained even when the network includes an application that cannot use an encryption key shared using QKD. For example, the application 20 may change operation thereof depending on the key type that is applicable to a global key acquired thereby.

### Second Arrangement

A second arrangement is described next. In the second arrangement, descriptions are given of differences thereof from the first arrangement while descriptions similar to those given in the first arrangement are omitted. In the second arrangement, the descriptions are given of a case where the application 20 can refer to the aforementioned connected node information before transmitting the aforementioned acquisition request for a global key.

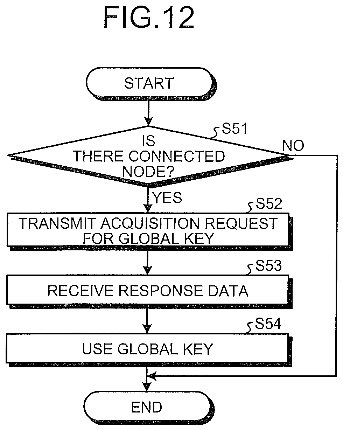

FIG. 12 is a flowchart illustrating an example of a method for acquiring an encryption key for an application in the second arrangement. First of all, the application 20 determines, by referring to the aforementioned connected node information, whether there is any one of the nodes 10 that is connected to a communication counterpart of the application 20 (Step S51).

If there is none of the nodes 10 that is connected to a communication counterpart of the application 20 (No at Step S51), the processing is ended.

If there is any one of the nodes 10 that is connected to a communication counterpart of the application 20 (Yes at Step S51), the application 20 transmits, to the node 10 that is connected to that application 20, an acquisition request for a global key to be used for performing encrypted data communication with a communication counterpart of that application 20 (Step S52). The application 20 then receives the aforementioned response data from the node 10 (Step S53). The application 20 then performs encrypted data communication with the communication counterpart of that application 20 using a global key contained in the response data received in the processing at Step S53 (Step S54).

### Modification of Second Arrangement

A modification of the second arrangement is described next. In the modification of the second arrangement, descriptions are given of a case where the application 20 can refer to not only the aforementioned connected node information but also the aforementioned node state information before transmitting the aforementioned acquisition request for a global key.

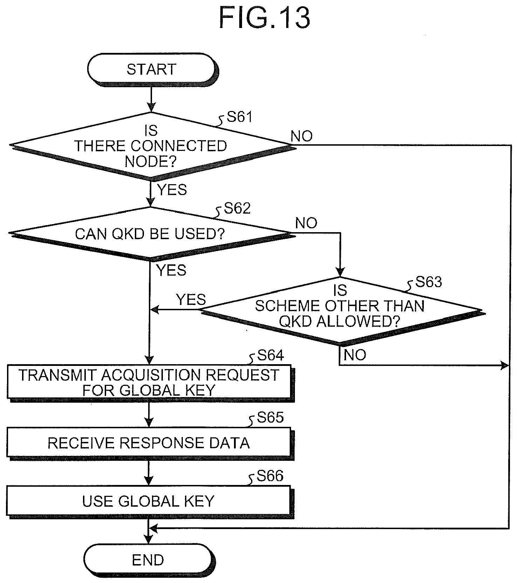

FIG. 13 is a flowchart illustrating a method for acquiring an encryption key for an application in the modification of the second arrangement. First of all, the application 20 determines, by referring to the aforementioned connected node information, whether there is any one of the nodes 10 that is connected to a communication counterpart of the application 20 (Step S61).

If there is none of the nodes 10 that is connected to the communication counterpart of the application 20 (No at Step S61), the processing is ended.

If QKD can be used (Yes at Step S62) or if a global key shared using a key sharing scheme other than QKD is allowed (Yes at Step S63), the application 20 transmits, to the node 10 that is connected to that application 20, an acquisition request for a global key to be used for performing encrypted data communication with the communication counterpart of that application 20 (Step S64).

If QKD cannot be used (No at Step S62), the application 20 determines whether a global key shared using a key sharing scheme other than QKD is allowed (Step S63). If a global key shared using a key sharing scheme other than QKD is not allowed (No at Step S63), the processing is ended.

If there is any one of the nodes 10 that is connected to the communication counterpart of the application 20 (Yes at Step S61), the application 20 determines, by referring to the aforementioned connected node information, whether QKD can be used between the node 10 connected to the application 20 and the node 10 connected to the communication counterpart of the application 20 (Step S62). The application 20 then receives the aforementioned response data from the node 10 (Step S65). The application 20 then performs encrypted data communication with the communication counterpart of that application 20 using a global key contained in the response data received in the processing at Step S64 (Step S66).

As described above, the second arrangement and the modification provide the same effect as the first arrangement alternatively through functions of an information processing apparatus that are implemented upon execution of the application 20.

### Third Arrangement

A third arrangement is described next. In the third arrangement, descriptions are given of differences thereof from the first arrangement while descriptions similar to those given in the first arrangement are omitted.

In the first arrangement, descriptions have been given of a case where the sharing control unit 15 of a certain one of the nodes 10 refers to the aforementioned node state information to determine whether another one of the nodes 10 is adapted to QKD. The third arrangement is suitable for a case where a certain QKD network (completely equipped with QKD devices) and a general network scheduled to be equipped with QKD devices in the future are to be connected to each other.

In a case where QKD devices are installed link by link in a network unlike the above case, it is more difficult to determine whether protection by a QKD link adapted to QKD is established entirely between certain ones of the nodes 10.

Likewise, in a case where a failure has occurred in any QKD link constituting a part of a certain QKD network, it may be also difficult to determine whether sharing of a global key between certain ones of the nodes 10 is affected by the failure.

In the third arrangement, descriptions are given of a first method and a second method for making it possible to determine as correctly as possible whether QKD can be used in these cases.

### First Method

The first method is a method by which the sharing control unit 15 of each of the nodes 10 refers not only to the aforementioned connected node information and the aforementioned node state information but also to link information.

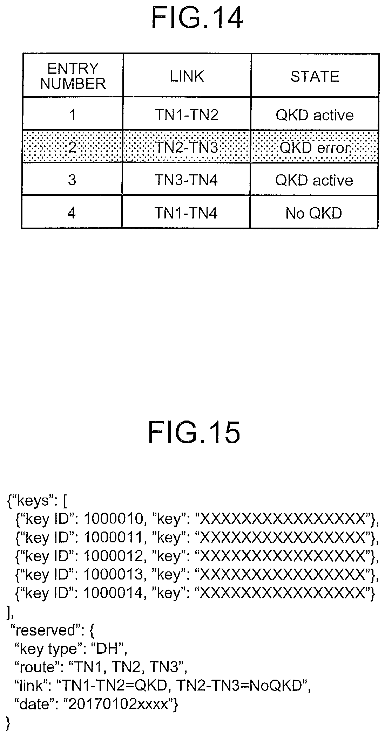

FIG. 14 illustrates an example of the link information in the third arrangement. The link information in the third arrangement contains entry numbers, links, and states. The entry numbers are numbers that identify respective pieces of data contained in the link information. The links are links among the nodes 10. The states are the states of the respective links. The state "QKD active" indicates that QKD can be used. The state "QKD error" indicates that QKD cannot be used in the corresponding link because an abnormality has occurred therein. The state "No QKD" indicates that QKD cannot be used in the corresponding link because QKD devices have not yet been installed in the nodes 10 at both sides of the link. By referring to the link information, the sharing control unit 15 can determine, with respect to each link in the QKD network, whether QKD can be used.

In the example of FIG. 14, the state of the link TN2 - TN3 is "QKD error", and the sharing control unit 15 therefore determines that QKD cannot be used in the link TN2 - TN3.

The sharing control unit 15 can determine, based on a route of the nodes 10 that are to share a global key and on the link information, whether QKD can be used in all of the links on the route. If QKD can be used in all of the links on the route, it can be determined that the global key is protected by QKD. The sharing control unit 15 therefore sets QKD as the key type in the aforementioned response data if QKD can be used in all of the links on the route.

To better reflect the security of the links, not only information on QKD but also information on any scheme other than QKD may be entered as the states in the link information in FIG. 14. For example, when the security of a link is protected by a key sharing scheme other than QKD, information indicating that state may be entered as the state of the link. That is, when the security of a certain link (for example, between TN1 and TN2) is secured by the DH key exchange scheme, "DH" may be entered as the state of the link TN1 - TN2.

Here, it is necessary to determine a process by which information on an actual route for sharing a global key is acquired for referring to the above link information. The following describes three possible alternatives of the process.

A first possible alternative is to use source routing. The source routing is a method in which, for example, when the nodes 10a and 10c in FIG. 5A share a global key, the sharing control unit 15 of the node 10a designates, for example, "the node 10a - the node 10b - the node 10c" as the route.

A second possible alternative is to cause the sharing control unit 15 of each of the nodes 10 to seek out a route for the sharing before or after operation for sharing the global key. Specifically, the sharing control unit 15 can seek out the route by using a function such as the traceroute command.

A third possible alternative is to, each time operation for sharing a global key is performed, cause the sharing control unit 15 of each of the nodes 10 on the route to add node information (or the link information) on that node 10 as additional information appended to the shared global key and transfer the additional information to the next node 10 on the route.

The sharing control unit 15 of each of the nodes 10 can use any one of the above first to third possible alternatives to correctly determine a route for sharing a global key. The sharing control unit 15 therefore can correctly assign the key type of a global key.

### Second Method

The second method is a method in which a first key sharing network protected by QKD and a second key sharing network protected by a key sharing scheme other than QKD are provided as key sharing networks to which the applications 20 are connected.

All links among the nodes 10 included in the first key sharing network are protected by QKD. In contrast, the second key sharing network includes at least one link that is not protected by QKD.

First of all, the sharing control unit 15 of one of the nodes 10 attempts to have a global key shared via the first key sharing network. If a global key is successfully shared via the first key sharing network, the security of the global key is ensured by QKD. The sharing control unit 15 then sets QKD as the key type of the global key.

Upon failing to have a global key shared via the first key sharing network, the sharing control unit 15 attempts to share a global key via the second key sharing network, which is protected by, for example, the DH key exchange scheme. The sharing control unit 15 then sets DH as the key type of the global key.

As described above, a communication system in the third arrangement not only enables more correct determination as to whether QKD can be used but also can provide the same effect as the communication system in the first arrangement.

### Fourth Arrangement

A fourth arrangement is described next. In the fourth arrangement, descriptions are given of differences thereof from the first arrangement while descriptions similar to those given in the first arrangement are omitted. In the fourth arrangement, descriptions are given of a case where the aforementioned response data further includes additional information.

FIG. 15 illustrates an example of the format of the response data in the fourth arrangement. The "keys" field contains "key ID" in addition to "key" described above. The "reserved" field contains, in addition to "key type" described above, "route", "link", and "date".

The nodes 10 that are used for sharing a global key are indicated by "route".

Links used for sharing a global key and schemes for protecting the security of these respective links are indicated by "link".

Time and date when the global key has been shared is indicated by "date".

Information other than the above may be contained in the response data. For example, the response data may contain, as information indicating a scheme for generating a global key, information on the quality of random numbers used for generating a global key or on a random number generator used for the generation.

For example, the response data may contain, as a scheme for protecting the security of a link, not only the aforementioned key sharing scheme but also detailed information on the key sharing scheme. For example, when the key sharing scheme is QKD, the detailed information on the key sharing scheme represents information such as a protocol used (such as BB84 and E91) and a security theory used.

For example, the response data may further contain performance information on the nodes 10. Examples of the performance information on the nodes 10 include vendor names of QKD devices installed in the respective nodes 10. For the node 10 that has not yet been equipped with a QKD device, information such as the installation schedule of a QKD device may be contained in the performance information on the nodes 10.

As described above, a communication system in the fourth arrangement enables each of the applications 20 to, based on information contained in the response data, more specifically determine the security of a global key acquired.

### Fifth Arrangement

A fifth arrangement is described next. In the fifth arrangement, descriptions are given of differences thereof from the first arrangement while descriptions similar to those given in the first arrangement are omitted. In the fifth arrangement, descriptions are given of a case where each of the applications 20 is allowed to designate a key sharing scheme for a global key.

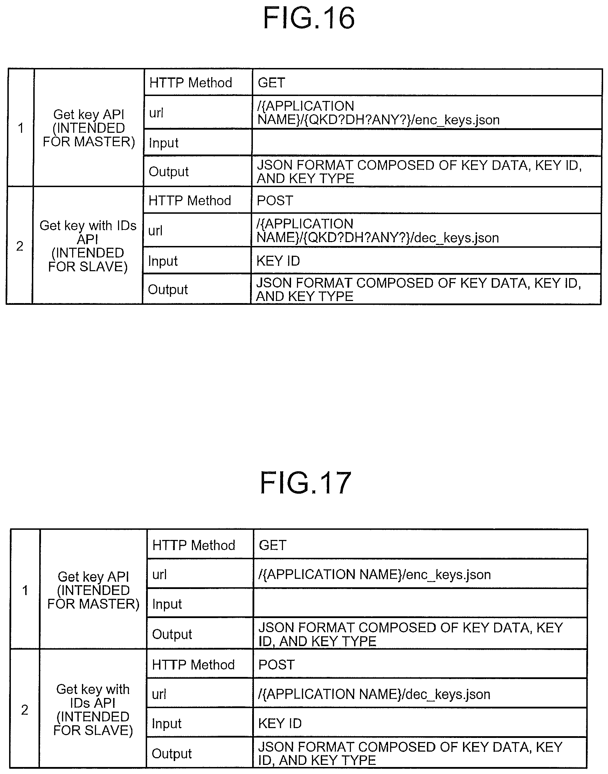

FIG. 16 illustrates examples of acquisition requests for a global key (application encryption key) in the fifth arrangement. In the examples of web APIs in FIG. 16, URLs contain {QKD?DH?ANY?}. The same definitions as those described above in FIG. 7 apply to QKD and ANY. When DH is applicable, the application 20 is requesting a global key shared using the DH key exchange scheme.

As described above, a communication system in the fifth arrangement enables each of the applications 20 to be provided with an appropriate global key even in a case where the communication system includes at least one of the applications 20 that uses an encryption scheme different from the encryption scheme used by the other applications 20.

### Sixth Arrangement

A sixth arrangement is described next. In the sixth arrangement, descriptions are given of differences thereof from the first arrangement while descriptions similar to those given in the first arrangement are omitted. In the sixth arrangement, descriptions are given of a case where the key type is not incorporated in URLs in web APIs. FIG. 17 illustrates examples of acquisition requests for a global key (application encryption key) in the sixth arrangement. In the examples of web APIs in FIG. 17, URLs contains no information on key types. In the first arrangement, information on key types is used for determining whether each of the applications 20 allows a scheme other than QKD. However, information on whether each of the applications 20 allows a scheme other than QKD can be provided without being incorporated into a URL. For example, alternatively, the nodes 10 may be configured to retain the information on whether each of the applications 20 allows a scheme other than QKD, in advance, in the form of information indicating a designated key sharing scheme.

Optionally, the information indicating a designated key sharing scheme can be retained as a parameter of the application 20 that is not incorporated in a URL. Optionally, the information indicating a designated key sharing scheme (for example, the information indicating whether a scheme other than QKD is allowed) may be retained as a system setting of the entire system or all of the nodes. Optionally, the nodes 10 or the system may determine the information indicating a designated key sharing scheme (for example, information indicating whether a certain one of the applications 20 is one that allows QKD), based on the type of the certain application 20.

For example, the transmission unit 16 of the node 10 refers to the information indicating a designated key sharing scheme set separately or determined based on the type of the application 20. If a global key (application encryption key) cannot be shared using a key sharing scheme designated by the designated key sharing scheme cannot be used, the transmission unit 16 transmits, to the application 20, error information indicating that the key sharing scheme thus designated cannot be used.

FIG. 17 illustrates examples of acquisition requests for a global key (application encryption key) in the sixth arrangement. When web APIs as illustrated in FIG. 17 are used, the node 10 can bring at least a basic function of the application 20 into operation even if the application 20 that is not adapted to the function of designating the key type connects to the node 10, the basic function being "connecting to the node 10 to acquire an encryption key; and performing encrypted communication using the encryption key". In this connection, it is important that, because the information on "key type" contained in the key data as illustrated in FIG. 9A to FIG. 9D, for example, is handled as optional information or an extension field, any application incapable of interpreting this extension can ignore the key type information.

The same applies to the "reserved" field contained in the key data as illustrated in FIG. 15, and it is important that any of the applications 20 that is incapable of interpreting this field can ignore this field and that any of the applications 20 that is capable of interpreting this field can interpret and use this field for determining a manner in which to use the key data. Thus, a flexible system can be built in which: functions such as the function of designating the key type and the function of interpreting extended response data, which is illustrated in this arrangement, are extended functions; and the application 20 that is provided with only a basic function and incapable of handling such functions and the application 20 that is provided with various extended functions described in the present application are compatibly allowed.

Furthermore, it is also important that the use of web APIs configured as illustrated in FIG. 17 allows the functional configuration described in the present application to be introduced without making any changes to the applications 20.

Lastly, an example of the hardware configuration of a communication system in any one of the first to the sixth arrangements is described.

### Example of Hardware Configuration

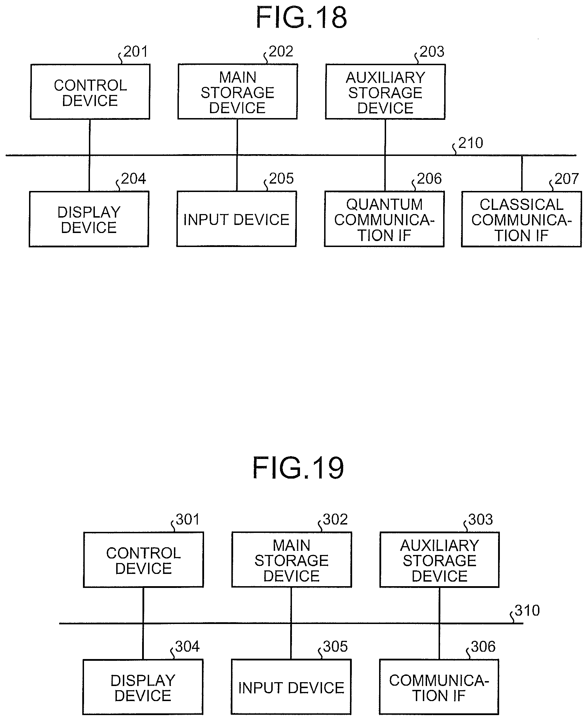

FIG. 18 illustrates an example of the hardware configuration of the main part of each of the nodes 10 in any one of the first to the sixth arrangements. The node 10 in any one of the first to the sixth arrangements includes a control device 201, a main storage device 202, an auxiliary storage device 203, a display device 204, an input device 205, a quantum communication interface (IF) 206, and a classical communication IF 207.

The control device 201, the main storage device 202, the auxiliary storage device 203, the display device 204, the input device 205, the quantum communication IF 206, and the classical communication IF 207 are connected to one another via a bus 210.

The control device 201 executes a computer program read into the main storage device 202 from the auxiliary storage device 203. The main storage device 202 is a memory such as a read only memory (ROM) and a random access memory (RAM). The auxiliary storage device 203 is, for example, a hard disk drive (HDD) and a memory card.

The display device 204 displays information such as the state of the node 10. The input device 205 receives input from a user.

The quantum communication IF 206 is an interface for connection to a quantum channel through which a single photon is transmitted at a time. The node 10 that has no QKD device installed therein may be devoid of the quantum communication IF 206.

The classical communication IF 207 is an interface for connection to a classical channel (control channel) such as Ethernet (trademark). The classical communication IF 207 may be adapted to wireless communication.

The node 10 in any one of the first to the sixth arrangements can be implemented through any apparatus provided with the hardware configuration in FIG. 18, examples of the apparatus including a general-purpose computer.

A computer program to be executed on the node 10 in any one of the first to the sixth arrangements is stored, as a file in an installable or executable format, in a computer-readable storage medium such as a compact disc read-only memory (CD-ROM), a memory card, a compact disc recordable (CD-R), or a digital versatile disk (DVD) and provided as a computer program product.

A computer program to be executed on the node 10 in any one of the first to the sixth arrangements may be stored on a computer connected to a network such as the Internet and be provided by being downloaded via the network.

A computer program to be executed on the node 10 in any one of the first to the sixth arrangements may be provided via a network such as the Internet without being downloaded.

A computer program to be executed on the node 10 in any one of the first to the sixth arrangements may be provided by being incorporated in the ROM or the like in advance.

A computer program to be executed on the node 10 in any one of the first to the sixth arrangements has a modular structure that includes any function that constitutes the functional configuration of the node 10 in any one of the first to the sixth arrangements and that can be implemented through a computer program.

The control device 201 reads, from a storage medium such as the auxiliary storage device 203, and executes a function to be implemented through a computer program, so that the function is loaded into the main storage device 202. That is, the function to be implemented through a computer program is generated on the main storage device 202.

At least one or all of the functions of the node 10 in any one of the first to the sixth arrangements may be implemented through hardware such as an integrated circuit (IC). An IC is a processor that executes, for example, dedicated processing.

When a plurality of processors are used to implement the functions, each of the processors may implement only one of the functions or may implement two or more of the functions.

Furthermore, any operational configuration may be applied to each of the nodes 10 in the first to the sixth arrangements. The nodes 10 in any one of the first to the sixth arrangements may be configured to operate as, for example, apparatuses included in a cloud system on a network.

FIG. 19 illustrates an example of the hardware configuration of an information processing apparatus that executes any one of the applications 20 in any one of the first to the sixth arrangements. This hardware configuration is the same as that of the node 10 (see FIG. 18) when the application 20 is executed by the node 10. The information processing apparatus that executes the application 20 in any one of the first to the sixth arrangements includes a control device 301, a main storage device 302, an auxiliary storage device 303, a display device 304, an input device 305, and a communication IF 306.

The control device 301, the main storage device 302, the auxiliary storage device 303, the display device 304, the input device 305, and the communication IF 306 are connected to one another via a bus 310. The control device 301, the main storage device 302, and the auxiliary storage device 303 can be described in the same manner as the control device 201, the main storage device 202, the auxiliary storage device 203 in FIG. 18, and descriptions thereof are therefore omitted.

The display device 304 displays information such as the state of the application 20 that is executed by the information processing apparatus. The input device 305 receives input from a user. The communication IF 306 is an interface for connection to Ethernet (trademark). The communication IF 306 may be adapted to wireless communication.

The information processing apparatus that executes the application 20 in any one of the first to the sixth arrangements can be implemented through any apparatus provided with the hardware configuration in FIG. 19, examples of the apparatus including a general-purpose computer.

A computer program, such as the application 20, to be executed on the information processing apparatus in any one of the first to the sixth arrangements is stored, as a file in an installable or executable format, in a computer-readable storage medium such as a CD-ROM, a memory card, a CD-R, or a DVD and provided as a computer program product.

A computer program, such as the application 20, to be executed on the information processing apparatus in any one of the first to the sixth arrangements may be stored on a computer connected to a network such as the Internet and be provided by being downloaded via the network.

A computer program, such as the application 20, to be executed on the information processing apparatus in any one of the first to the sixth arrangements may be provided via a network such as the Internet without being downloaded.

A computer program, such as the application 20, to be executed on the information processing apparatus in any one of the first to the sixth arrangements may be provided by being incorporated in the ROM or the like in advance.

At least one or all of the functions of the application 20 in any one of the first to the sixth arrangements may be implemented through hardware such as an IC. An IC is a processor that executes, for example, dedicated processing.

When a plurality of processors are used to implement the functions, each of the processors may implement only one of the functions or may implement two or more of the functions.

Furthermore, any operational configuration may be applied to the information processing apparatus that executes the application 20 in any one of the first to the sixth arrangements. The information processing apparatus that executes the application 20 in any one of the first to the sixth arrangements may be configured to operate as, for example, an apparatus included in a cloud system on a network.

While certain arrangements have been described, these arrangements have been presented by way of example only, and are not intended to limit the scope of the claims. Indeed, the apparatuses described herein may be embodied in a variety of other forms; furthermore various omissions, substitutions and changes in the form of the apparatuses described herein may be made.
Example 1. A communication apparatus includes a reception unit, a generation unit, a determination unit, a sharing control unit, and a transmission unit. The reception unit is configured to receive, from an application, an acquisition request for an encryption key to be used for encrypted data communication between the application and a communication counterpart thereof. The generation unit is configured to generate the encryption key. The determination unit is configured to determine whether there is another communication apparatus connected to the communication counterpart. The sharing control unit is configured to, with the other communication apparatus, share the encryption key using quantum key distribution when being able to share the encryption key using quantum key distribution. The sharing control unit is configured to, with the other communication apparatus, share the encryption key using a key sharing scheme other than quantum key distribution when being unable to share the encryption key using quantum key distribution. The transmission unit is configured to transmit, to the application, the encryption key and information indicating a scheme used for sharing the encryption key.
Example 2. In the communication apparatus according to Example 1, the transmission unit is further configured to refer to information indicating a designated key sharing scheme set separately or determined depending on a type of the application, and if sharing the encryption key using a key sharing scheme designated by the designated key sharing scheme is impossible, transmit error information indicating that using the designated key sharing scheme is impossible.
Example 3. In the communication apparatus according to Example 1, the acquisition request contains information designating a key sharing scheme. The transmission unit is further configured to, if sharing the encryption key using the key sharing scheme designated by the acquisition request is impossible, transmit, to the application, error information indicating that using the designated key sharing scheme is impossible.
Example 4. In the communication apparatus according to Example 1, the transmission unit is further configured to, if there is not another communication apparatus connected to the communication counterpart, transmit, to the application, error information indicating that providing the encryption key is impossible.
Example 5. In the communication apparatus according to Example 1, the sharing control unit is further configured to refer to information indicating states of one or more links included in a key sharing network to be used for sharing the encryption key and thereby determine whether it is possible to share the encryption key with the other communication apparatus using quantum key distribution.
Example 6. In the communication apparatus according to Example 1, the transmission unit is further configured to transmit, to the application, at least one of: information indicating a route of one or more links used in sharing the encryption key; information indicating a scheme used for protecting security for each link in the route; information indicating a scheme used for generating the encryption key; information indicating time and date when having shared the encryption key with the other communication apparatus; and performance information of the communication apparatus itself.
Example 7. A communication system includes a plurality of communication apparatuses, and a plurality of information processing apparatuses. The plurality of information processing apparatuses each execute an application. Each of the communication apparatuses includes a reception unit, a generation unit, a determination unit, a sharing control unit, and a transmission unit. The reception unit is configured to receive, from an application, an acquisition request for an encryption key to be used for encrypted data communication between the application and a communication counterpart thereof. The generation unit is configured to generate the encryption key. The determination unit is configured to determine whether there is another communication apparatus connected to the communication counterpart. The sharing control unit is configured to, with the other communication apparatus, share the encryption key using quantum key distribution when being able to share the encryption key using quantum key distribution. The sharing control unit is configured to, with the other communication apparatus, share the encryption key using a key sharing scheme other than quantum key distribution when being unable to share the encryption key using quantum key distribution. The transmission unit is configured to transmit, to the application, the encryption key and information indicating a scheme used for sharing the encryption key.
Example 8. A key sharing method includes: receiving, from an application, an acquisition request for an encryption key to be used for encrypted data communication between the application and a communication counterpart thereof; generating the encryption key; determining whether there is another communication apparatus connected to the communication counterpart; with the other communication apparatus, sharing the encryption key using quantum key distribution when being able to share the encryption key using quantum key distribution, and sharing the encryption key using a key sharing scheme other than quantum key distribution when being unable to share the encryption key using quantum key distribution; and transmitting, to the application, the encryption key and information indicating a scheme used for sharing the encryption key.
Example 9. A computer-readable medium includes instructions which, when executed by a computer, cause the computer to function as a reception unit, a generation unit, a determination unit, a sharing control unit, and a transmission unit. The reception unit is configured to receive, from an application, an acquisition request for an encryption key to be used for encrypted data communication between the application and a communication counterpart thereof. The generation unit is configured to generate the encryption key. The determination unit is configured to determine whether there is another communication apparatus connected to the communication counterpart. The sharing control unit is configured to, with the other communication apparatus, share the encryption key using quantum key distribution when being able to share the encryption key using quantum key distribution. The sharing control unit is configured to, with the other communication apparatus, share the encryption key using a key sharing scheme other than quantum key distribution when being unable to share the encryption key using quantum key distribution. The transmission unit is configured to transmit, to the application, the encryption key and information indicating a scheme used for sharing the encryption key.

## Claims

1. A communication apparatus (10) comprising:
a reception unit (12) configured to receive, from an application (20), an acquisition request for an encryption key to be used for encrypted data communication between the application (20) and a communication counterpart thereof;
a generation unit (13) configured to generate the encryption key;
a determination unit (14) configured to determine whether there is another communication apparatus (10) connected to the communication counterpart;
a sharing control unit (15) configured to, with the other communication apparatus (10),
share the encryption key using quantum key distribution when being able to share the encryption key using quantum key distribution, and
share the encryption key using a key sharing scheme other than quantum key distribution when being unable to share the encryption key using quantum key distribution; and
a transmission unit (16) configured to transmit, to the application (20), the encryption key and information indicating a scheme used for sharing the encryption key.

2. The communication apparatus (10) according to claim 1, wherein the transmission unit (16) is further configured to refer to information indicating a designated key sharing scheme set separately or determined depending on a type of the application (20), and if sharing the encryption key using a key sharing scheme designated by the designated key sharing scheme is impossible, transmit error information indicating that using the designated key sharing scheme is impossible.

3. The communication apparatus (10) according to claim 1, wherein
the acquisition request contains information designating a key sharing scheme, and
the transmission unit (16) is further configured to, if sharing the encryption key using the key sharing scheme designated by the acquisition request is impossible, transmit, to the application (20), error information indicating that using the designated key sharing scheme is impossible.

4. The communication apparatus (10) according to claim 1, wherein the transmission unit (16) is further configured to, if there is not another communication apparatus (10) connected to the communication counterpart, transmit, to the application (20), error information indicating that providing the encryption key is impossible.

5. The communication apparatus (10) according to claim 1, wherein the sharing control unit (15) is further configured to refer to information indicating states of one or more links included in a key sharing network to be used for sharing the encryption key and thereby determine whether it is possible to share the encryption key with the other communication apparatus (10) using quantum key distribution.

6. The communication apparatus (10) according to claim 1, wherein the transmission unit (16) is further configured to transmit, to the application (20), at least one of:
information indicating a route of one or more links used in sharing the encryption key;
information indicating a scheme used for protecting security for each link in the route;
information indicating a scheme used for generating the encryption key;
information indicating time and date when having shared the encryption key with the other communication apparatus (10); and
performance information of the communication apparatus (10) itself.

7. A communication system comprising:
a plurality of communication apparatuses (10); and
a plurality of information processing apparatuses that each execute an application (20), wherein each of the communication apparatuses (10) comprises:
a reception unit (12) configured to receive, from an application (20), an acquisition request for an encryption key to be used for encrypted data communication between the application (20) and a communication counterpart thereof;
a generation unit (13) configured to generate the encryption key;
a determination unit (14) configured to determine whether there is another communication apparatus (10) connected to the communication counterpart;
a sharing control unit (15) configured to, with the other communication apparatus (10),
share the encryption key using quantum key distribution when being able to share the encryption key using quantum key distribution, and
share the encryption key using a key sharing scheme other than quantum key distribution when being unable to share the encryption key using quantum key distribution; and
a transmission unit (16) configured to transmit, to the application (20), the encryption key and information indicating a scheme used for sharing the encryption key.

8. A key sharing method comprising:
receiving, from an application (20), an acquisition request for an encryption key to be used for encrypted data communication between the application (20) and a communication counterpart thereof;
generating the encryption key;
determining whether there is another communication apparatus (10) connected to the communication counterpart;
with the other communication apparatus (10), sharing the encryption key using quantum key distribution when being able to share the encryption key using quantum key distribution, and sharing the encryption key using a key sharing scheme other than quantum key distribution when being unable to share the encryption key using quantum key distribution; and
transmitting, to the application (20), the encryption key and information indicating a scheme used for sharing the encryption key.

9. A computer-readable medium comprising instructions which, when executed by a computer, cause the computer to function as:
a reception unit (12) configured to receive, from an application (20), an acquisition request for an encryption key to be used for encrypted data communication between the application (20) and a communication counterpart thereof;
a generation unit (13) configured to generate the encryption key;
a determination unit (14) configured to determine whether there is another communication apparatus (10) connected to the communication counterpart;
a sharing control unit (15) configured to, with the other communication apparatus (10),
share the encryption key using quantum key distribution when being able to share the encryption key using quantum key distribution, and
share the encryption key using a key sharing scheme other than quantum key distribution when being unable to share the encryption key using quantum key distribution; and
a transmission unit (16) configured to transmit, to the application (20), the encryption key and information indicating a scheme used for sharing the encryption key.
